# EUROPÄISCHE PATENTSCHRIFT

(11) **EP 2 725 152 B1**
(45) Veröffentlichungstag und Bekanntmachung des Hinweises auf die Patenterteilung: **01.12.2021**
(21) Anmeldenummer: 13003578.5
(22) Anmeldetag: 16.07.2013
(51) Int. Cl.: B60K 31/00, B60W 10/06, F04B 49/10, F16H 61/4061, F16H 61/421, F16H 61/431, F16H 61/47, E02F 9/22

(54) **Vorrichtung zur Fahrgeschwindigkeitssteuerung/-regelung eines Arbeitsfahrzeugs und Verfahren hierzu**
Device for controlling/regulating the driving speed of a work vehicle and method therefor
Dispositif de commande/régulation de la vitesse de conduite d'un véhicule de travail et procédé correspondant

(30) Priorität: 25.10.2012 DE 102012020984
(43) Veröffentlichungstag der Anmeldung: 30.04.2014
(73) Patentinhaber: Liebherr-Hydraulikbagger GmbH, 88457 Kirchdorf/Iller (DE)
(72) Erfinder: Lang, Johannes, 89281 Altenstadt (DE); Meitinger, Bernhard, 87740 Buxheim (DE)
(74) Vertreter: Laufhütte, Dieter

(56) Entgegenhaltungen:
- DE-A1- 10 214 598
- DE-A1-102006 047 954
- DE-B3- 10 310 980
- US-A- 5 056 615
- US-A- 5 335 750
- US-A1- 2007 096 667

## Beschreibung

Die vorliegende Erfindung betrifft eine Vorrichtung zur Fahrgeschwindigkeitssteuerung/-regelung eines Arbeitsfahrzeugs und ein Verfahren hierzu.

Vorrichtungen und Verfahren zur Geschwindigkeitssteuerung/-regelung von Arbeitsfahrzeugen sind aus dem Stand der Technik, siehe z.B. Dokumenten US 5 335 750 A, US 5 056 615 A, DE 103 10 980 B3 oder DE 10 2006 047954 A1, bekannt. Gängige Systeme umfassen zum Beispiel hydraulische Antriebe, bei denen ein Druckmedium wie Hydrauliköl von einem Antriebsmotor und einer Hydraulikpumpe zunächst mit Druck beaufschlagt wird, um dann für den Vortrieb des Arbeitsfahrzeugs genutzt zu werden. Das Druckmedium treibt hierbei einen Hydraulikfahrmotor zur Bewegung an. Des Weiteren kann das Druckmedium zum Betrieb von weiteren Hydraulikantrieben wie zum Beispiel Hydraulikzylindern für Baggerarme oder ähnlichem genutzt werden. Dabei können die unterschiedlichen Antriebe oder Verbraucher des Arbeitsfahrzeugs voneinander unterschiedliche Anforderungen an Lastdruck und Durchflussrate des Druckmediums aufweisen. Es ist deshalb bekannt, zur Einstellung der unterschiedlichen Verbraucher Steuer-/Regelelemente wie zum Beispiel Steuerschieber bereitzustellen, über die die unterschiedlichen Lastdrucke und Durchflussraten beim Betrieb der Verbraucher eingestellt werden können. Ein solcher Steuerschieber kann zum Beispiel in Abhängigkeit von seiner Stellung eine bestimmte Ölmenge zu einem Hydraulikfahrmotor freigeben, um über diese freigegebene Menge die Fahrgeschwindigkeit des Fahrzeugs zu steuern/regeln.

Die das Druckmedium mit Druck beaufschlagende Hydraulikpumpe wird dabei in einem hydraulisch-mechanischen Druckregelkreis betrieben, bei dem ein Versorgungsdruck erzeugt wird, der um einen Drucküberschuss Δp gegenüber dem höchsten anfallenden Lastdruck erhöht ist.

Zum Erreichen der gewünschten Geschwindigkeit kann der Versorgungsdruck zum Beispiel über eine Drosselvorrichtung des Steuerschiebers auf den Lastdruck herunter gesteuert/geregelt werden, der der gewünschten Geschwindigkeit entspricht.

Hierbei ergibt sich das Problem, dass ein entsprechendes Herunterdrosseln des Versorgungsdrucks einen dem Drucküberschuss entsprechenden Leistungsverlust in Form von abgegebener Wärmeenergie nach sich zieht.

Aufgabe der vorliegenden Erfindung ist es daher, ein hinsichtlich seines Wirkungsgrades verbessertes Verfahren zur Geschwindigkeitssteuerung/-regelung eines Arbeitsfahrzeugs anzugeben. Diese Aufgabe wird durch eine Vorrichtung mit den Merkmalen des Anspruchs 1 und ein Verfahren mit den Merkmalen des Anspruchs 6 gelöst.

In einem Parallelbetrieb von zwei oder mehreren Funktionen des Arbeitsfahrzeugs wie zum Beispiel einem gleichzeitigen Fahren eines Baggers und einem Bewegen einer Baggerschaufel, ist aufgrund der unterschiedlichen Anforderungsprofile der unterschiedlichen Verbraucher an das Druckmedium erfindungsgemäß ein Steuerschieber der genannten Art zur Steuerung/Regelung der Geschwindigkeiten und der Richtungen der im Parallelbetrieb erfolgenden Abläufe vorgesehen.

Liegt hingegen ein reiner Fahrbetrieb vor, das heißt ein Betrieb, in dem eine Antriebsleistung nur von dem wenigstens einen Hydraulikfahrmotor und von keinen sonstigen Hydraulikantrieben erbracht wird, so ist die zur Geschwindigkeitssteuerung/-regelung notwendige Einstellung des Druckmediums über eine Drehzahlregelung des Antriebsmotors vornehmbar.

Vorteilhaft daran ist, dass auf diese Art ein Versorgungsdruck erzeugt werden kann, der möglichst nahe am für die gewünschte Fahrgeschwindigkeit nötigen Lastdruck liegt. Hierdurch entfällt im Vergleich zum Stand der Technik das verlustbringende Drosseln von einem Versorgungsdruck auf einen gewünschten niedrigeren Lastdruck. Im reinen Fahrbetrieb ist die Hydraulikpumpe voll ausgeschwenkt.

Während die Richtungssteuerung des Hydraulikfahrmotors immer über den Steuerschieber erfolgt, ist es zur Steuerung/Regelung der Fahrgeschwindigkeit weiterhin denkbar, dass der Controller der Vorrichtung über weitere Schnittstellen mit weiteren Vorrichtungskomponenten verbunden ist und den Steuerungs-/Regelungsvorgang der Fahrgeschwindigkeit auch darüber kontrolliert.

So ist in einer weiterhin bevorzugten Ausführungsform mit einer zweiten Schnittstelle zwischen Controller und Hydraulikfahrmotor die Fahrgeschwindigkeit des wenigstens einen Hydraulikfahrmotors auch über die Einstellung des Schwenkwinkels des Hydraulikfahrmotors steuerbar/regelbar.

Eine andere bevorzugte Ausführungsform umfasst die Verwendung einer dritten Schnittstelle zwischen Controller und Hydraulikpumpe, so dass die Fahrgeschwindigkeit des wenigstens einen Hydraulikfahrmotors auch über die Einstellung des Schwenkwinkels der Hydraulikpumpe steuerbar/regelbar ist.

Allgemein kommen als Antriebsmotor alle gängigen Motorarten in Frage. Die Erfindung ist nicht auf die Verwendung der heute gängigsten Dieselmotoren beschränkt, sondern kann auch mit Ottomotoren ausgeführt werden oder die Antriebsleistung kann durch Hybridaggregate oder durch auf Brennstoffzellen basierende Systeme bereitgestellt werden. Bevorzugt ist jedoch, dass der Antriebsmotor ein Dieselmotor ist.

Die Erfindung betrifft weiter ein Verfahren zur Fahrgeschwindigkeitssteuerung/- regelung eines Arbeitsfahrzeugs mit den Merkmalen des Anspruchs 7. Danach ist ein Verfahren zur Fahrgeschwindigkeitssteuerung/-regelung eines Arbeitsfahrzeugs mittels einer Vorrichtung nach einem der Ansprüche 1 bis 6 vorgesehen, wobei das Verfahren wenigstens einen Schritt umfasst, in dem erfasst wird, ob neben dem wenigstens einen Hydraulikfahrmotor weitere Verbraucher betrieben werden, und wobei im Fall, in dem keine weiteren Verbraucher betrieben werden, die Fahrgeschwindigkeitssteuerung/-regelung in einem weiteren Schritt von einer Steuerung/Regelung über ein Steuer-/Regelelemente wie einen Steuerschieber zu einer dazu alternative Fahrgeschwindigkeitssteuerung/-regelung umgeschaltet wird.

Es kann vorgesehen sein, dass die alternative Fahrgeschwindigkeitssteuerung/- regelung eine Steuerung/Regelung der Fahrgeschwindigkeit des wenigstens einen Hydraulikfahrmotors über eine Steuerung/Regelung der Geschwindigkeit eines Antriebsmotors umfasst.

Darüber hinaus ist es möglich, dass die alternative Fahrgeschwindigkeitssteuerung/-regelung eine Steuerung/Regelung der Fahrgeschwindigkeit des wenigstens einen Hydraulikfahrmotors über die Einstellung eines Schwenkwinkels des Hydraulikfahrmotors umfasst.

Ferner ist es möglich, dass die alternative Fahrgeschwindigkeitssteuerung/- regelung eine Steuerung/Regelung der Fahrgeschwindigkeit des wenigstens einen Hydraulikfahrmotors über die Einstellung eines Schwenkwinkels der Hydraulikpumpe umfasst.

Weitere Vorteile und Einzelheiten der Erfindung werden anhand der nachfolgenden Beschreibung, die auf die Figuren Bezug nimmt, näher beschrieben. Die Figuren zeigen:
- Figur 1:: eine Vorrichtung zur Geschwindigkeitssteuerung/-regelung durch den Steuerschieber nach dem Stand der Technik,
- Figur 2:: eine Vorrichtung zur Fahrgeschwindigkeitssteuerung/-regelung durch den Antriebsmotor,
- Figur 3:: eine Vorrichtung zur Fahrgeschwindigkeitssteuerung/-regelung durch den Antriebsmotor und den Hydraulikfahrmotor,
- Figur 4:: eine Vorrichtung zur Fahrgeschwindigkeitssteuerung/-regelung durch den Antriebsmotor, die Hydraulikpumpe und den Hydraulikfahrmotor und
- Figur 5:: ein Druck-Volumenstrom-Diagramm.

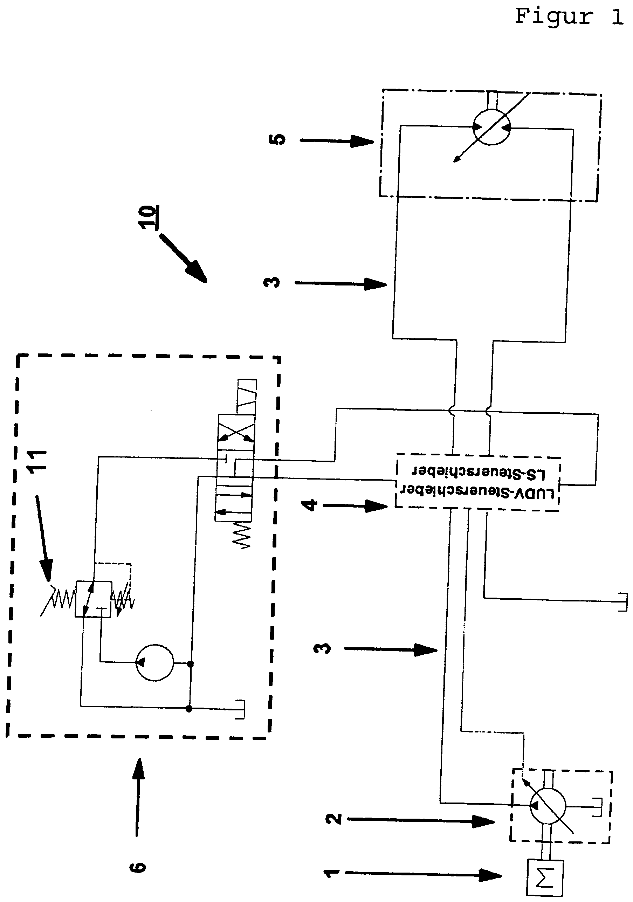

Figur 1 zeigt eine Vorrichtung 10 zum Steuern/Regeln der Geschwindigkeit eines Arbeitsfahrzeugs. Das Arbeitsfahrzeug selbst wird dabei nicht gezeigt. Ein Antriebsmotor 1 treibt hierbei eine Hydraulikpumpe 2 an, um so ein Druckmedium wie zum Beispiel Hydrauliköl mit Druck zu beaufschlagen. Das Druckmedium ist über eine der Hydraulikleitungen 3 dem Steuerschieber 4 zuführbar. Aufgabe des Steuerschiebers 4 ist es, dass Druckmedium bedarfsabhängig einem oder mehreren Verbraucher zuzuführen.

Das gezeigte Beispiel umfasst dabei eine elektrohydraulische Vorsteuerung 6, mittels derer der Steuerschieber 4 hinsichtlich Geschwindigkeit und Richtung des Hydraulikfahrmotors 5 über ein Druckregelventil 11 bzw. ein 4/3-Wegeventil vorgesteuert werden kann. Das Druckregelventil 11 kann dabei beispielsweise als hydraulisches Fahrpedal 11 ausgeführt sein.

Der Steuerschieber 4 reduziert unter Anderem den von der Hydraulikpumpe 2 bereitgestellten Versorgungsdruck mittels zum Beispiel einer Drosselvorrichtung, um ihn so auf einen von einem der Verbraucher benötigten niedrigeren Lastdruck zu verringern. Die dabei auftretende Verlustleistung wird dem System als Wärme entzogen und kann nicht zum Antrieb genutzt werden.

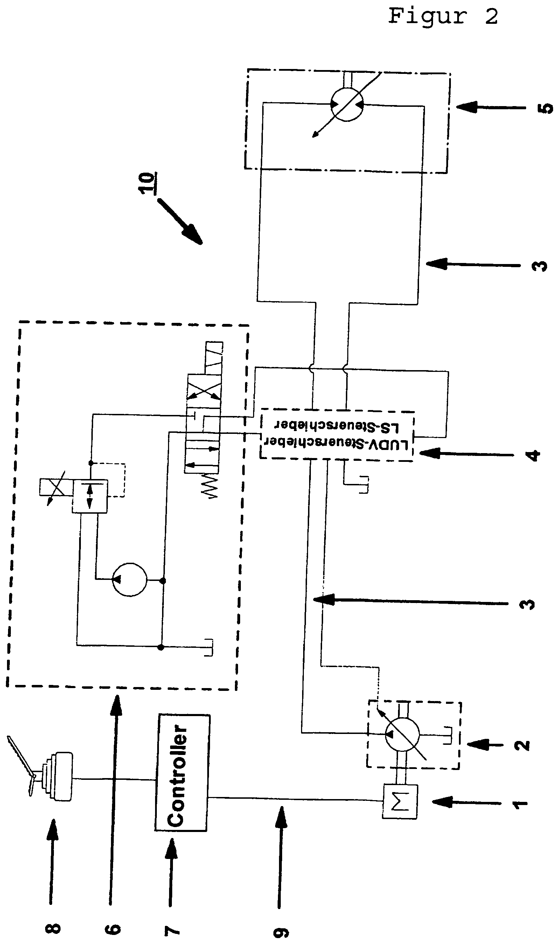

Figur 2 zeigt eine erfindungsgemäße Vorrichtung 10, die im Unterschied zum in Figur 1 gezeigten Stand der Technik einen Controller 7 umfasst, welcher auf Eingabeseite mit einem Eingabeelement 8 und auf der Ausgabeseite mit dem Antriebsmotor 1 verbunden ist. Über das Eingabeelement 8, welches zum Beispiel das Gaspedal des Arbeitsfahrzeugs oder ein sonstiger Schalter oder Regler sein kann, empfängt der Controller 7 Informationen über eine Sollfahrgeschwindigkeit des Arbeitsfahrzeugs. Stellt der Controller 7 fest, dass keine weiteren Verbraucher außer dem Hydraulikfahrmotor 5 betrieben werden, so generiert der Controller 7 entsprechend der empfangenen Informationen ein Signal und leitet dieses über eine Verbindung 9 an den Antriebsmotor 1, um die Drehgeschwindigkeit des Antriebsmotors 1 gemäß der Sollfahrgeschwindigkeit einzustellen. Es findet somit kein Drosselvorgang mehr im Bereich des Steuerschiebers 4 zum Zweck der Fahrgeschwindigkeitssteuerung/-regelung statt und die im Beispiel der Figur 1 auftretenden Verlustleistungen werden minimiert.

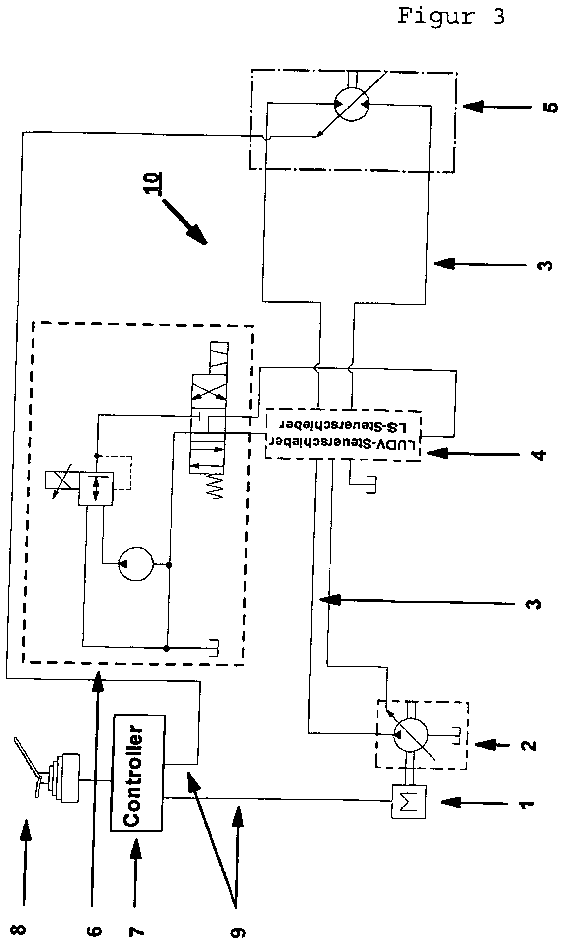

Figur 3 zeigt eine Ausführungsform mit einer weiteren Eingriffsmöglichkeit für die Steuerung/Regelung der Fahrgeschwindigkeit des Hydraulikfahrmotors 5. Der Controller 7 ist in dieser Ausführungsform nicht nur mit dem Antriebsmotor 1 verbunden, sondern über eine zweite Verbindung 9 auch mit dem Hydraulikfahrmotor 5. Am Hydraulikfahrmotor 5 selbst ist es möglich, in Abhängigkeit von der gewünschten Fahrgeschwindigkeit des Arbeitsfahrzeugs, den Schwenkwinkel des Hydraulikfahrmotors 5 zu verändern. Somit ergeben sich in dieser zweiten Ausführungsform zwei Eingriffsmöglichkeiten zur Steuerung/Regelung der Fahrgeschwindigkeit des Arbeitsfahrzeugs.

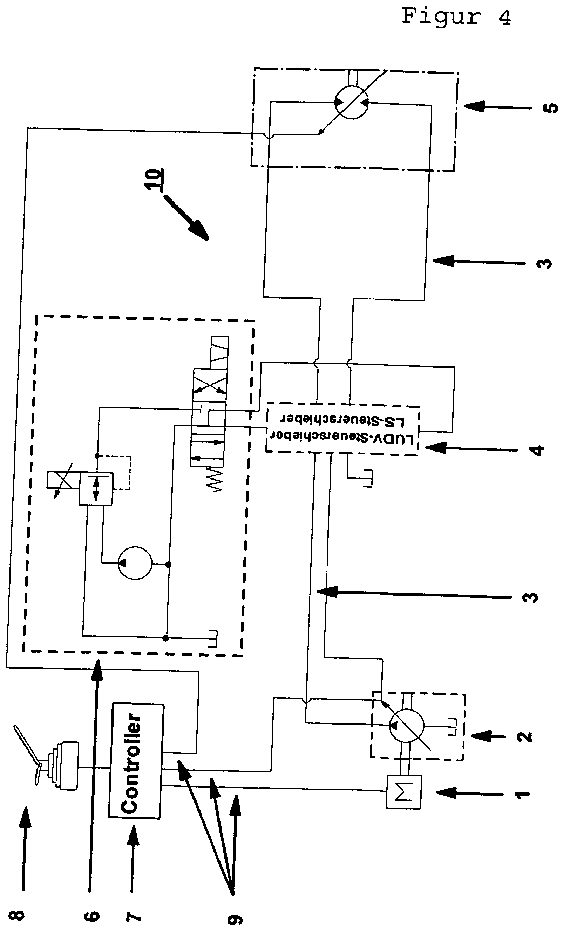

Eine Ausführungsform mit drei Eingriffsmöglichkeiten zur Steuerung/Regelung der Fahrgeschwindigkeit des Hydraulikfahrmotors 5 ist in Figur 4 gezeigt. Der Controller 7 ist wie im vorherigen Beispiel mit dem Antriebsmotor 1 und dem Hydraulikfahrmotor 5 verbunden und kann darüber hinaus die Hydraulikpumpe 2 über eine dritte Verbindung 9 steuern/regeln. Wie im vorherigen Ausführungsbeispiel der Schwenkwinkel des Hydraulikfahrmotors 5 von dem Controller 7 variiert werden kann, so kann im vorliegenden dritten Ausführungsbeispiel der Schwenkwinkel der Hydraulikpumpe 2 von dem Controller 7 variiert werden.

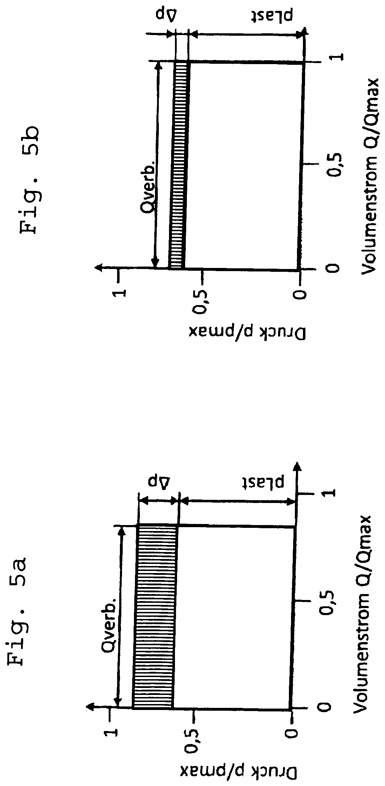

Die Figuren 5a und 5b stellen die Größen Versorgungsdruck (,Druck'), Lastdruck (,pLast'), Volumenstrom und die Druckdifferenz Δp zwischen Versorgungsdruck und Lastdruck in Abhängigkeit voneinander dar. Volumenstrom und Versorgungsdruck sind dabei bezüglich ihrer jeweiligen Maximalwerte normalisiert.

Figur 5a stellt die Verlustleistung graphisch dar, die sich beim aus dem Stand der Technik bekannten Drosselvorgang ergibt. Die Verlustleistung ist proportional zu Δp, welches abhängig ist von der Druckdifferenz zwischen dem Versorgungsdruck und dem im Vergleich dazu niedrigeren Lastdruck des Hydraulikfahrmotors 5.

Figur 5b stellt demgegenüber die Verlustleistung der erfindungsgemäßen Vorrichtung 10 bzw. des erfindungsgemäßen Verfahrens dar. Hierbei ist zu erkennen, dass Δp durch die erfindungsgemäß mögliche direkte Steuerung/Regelung von Antriebsmotor 1, Schwenkwinkel des Hydraulikfahrmotors 5 und/oder Schwenkwinkel der Hydraulikpumpe 2 gegenüber dem Stand der Technik verringert ist. Der gleiche Lastdruck wie in Figur 5a kann also unter Aufbringen eines geringeren Versorgungsdrucks bereitgestellt werden.

## Patentansprüche

1. Vorrichtung (10) zur Fahrgeschwindigkeitssteuerung/-regelung eines Arbeitsfahrzeugs, umfassend
wenigstens einen Antriebsmotor (1),
wenigstens eine verstellbare Hydraulikpumpe (2) zum Beaufschlagen eines Druckmediums mit Druck, welche durch den wenigstens einen Antriebsmotor (1) angetrieben wird,
wenigstens einen Hydraulikfahrmotor (5) zum Vortrieb des Arbeitsfahrzeugs, wenigstens einen Steuerschieber (4), über welchen das Druckmedium dem wenigstens einen Hydraulikfahrmotor (5) zuführbar ist,
wenigstens einen weiteren Hydraulikantrieb, welcher von der wenigstens einen Hydraulikpumpe (2) mit Druckmittel versorgt wird, sowie wenigstens einen Controller (7), mittels welchem ein reiner Fahrbetrieb, in dem eine Antriebsleistung nur von dem wenigstens einen Hydraulikfahrmotor und von keinen der weiteren Hydraulikantrieben erbracht wird, feststellbar ist,
wobei im reinen Fahrbetrieb die Drehgeschwindigkeit des wenigstens einen Hydraulikfahrmotors (5) wenigstens über die Drehgeschwindigkeit des Antriebsmotors (1) steuerbar/regelbar ist,
wobei die Drehgeschwindigkeit des Antriebsmotors (1) mittels des wenigstens einen Controllers (7) einstellbar ist, und
wobei die Hydraulikpumpe (2) voll ausgeschwenkt ist.

2. Vorrichtung (10) nach Anspruch 1, **dadurch gekennzeichnet, dass** die Drehrichtung des wenigstens einen Hydraulikfahrmotors (5) über den Steuerschieber (4) steuerbar/regelbar ist.

3. Vorrichtung (10) nach einem der vorhergehenden Ansprüche, **dadurch gekennzeichnet, dass** der wenigstens eine Hydraulikfahrmotor (5) verstellbar ist und die Drehgeschwindigkeit des wenigstens einen Hydraulikfahrmotors (5) über die Einstellung des Schwenkwinkels des Hydraulikfahrmotors (5) steuerbar/regelbar ist.

4. Vorrichtung (10) nach einem der vorhergehenden Ansprüche, **dadurch gekennzeichnet, dass** die Drehgeschwindigkeit des wenigstens einen Hydraulikfahrmotors (5) über die Einstellung des Schwenkwinkels der Hydraulikpumpe (2) steuerbar/regelbar ist.

5. Vorrichtung (10) nach einem der vorhergehenden Ansprüche, **dadurch gekennzeichnet, dass** der Antriebsmotor (1) ein Dieselmotor ist.

6. Verfahren zur Fahrgeschwindigkeitssteuerung/-regelung eines Arbeitsfahrzeugs mittels einer Vorrichtung (10) nach einem der Ansprüche 1 bis 5, wobei das Verfahren wenigstens einen Schritt umfasst, in dem erfasst wird, ob neben dem wenigstens einen Hydraulikfahrmotor (5) weitere Verbraucher betrieben werden, und wobei im Fall, in dem keine weiteren Verbraucher betrieben werden, die Fahrgeschwindigkeitssteuerung/-regelung in einem weiteren Schritt von einer Steuerung/Regelung über ein Steuer-/Regelelement wie einen Steuerschieber (4) zu einer dazu alternativen Fahrgeschwindigkeitssteuerung/-regelung umgeschaltet wird.

7. Verfahren nach Anspruch 6, **dadurch gekennzeichnet, dass** die alternative Fahrgeschwindigkeitssteuerung/-regelung eine Steuerung/Regelung der Drehgeschwindigkeit des wenigstens einen Hydraulikfahrmotors (5) über eine Steuerung/Regelung der Drehgeschwindigkeit des Antriebsmotors (1) umfasst.

8. Verfahren nach Anspruch 6 oder 7, **dadurch gekennzeichnet, dass** die alternative Fahrgeschwindigkeitssteuerung/-regelung eine Steuerung/Regelung der Drehgeschwindigkeit des wenigstens einen Hydraulikfahrmotors (5) über die Einstellung des Schwenkwinkels des Hydraulikfahrmotors (5) umfasst.

9. Verfahren nach einem der Ansprüche 6 bis 8, **dadurch gekennzeichnet, dass** die alternative Fahrgeschwindigkeitssteuerung/-regelung eine Steuerung/Regelung der Drehgeschwindigkeit des wenigstens einen Hydraulikfahrmotors (5) über die Einstellung des Schwenkwinkels der Hydraulikpumpe (2) umfasst.

## Claims

1. An apparatus (10) for controlling/regulating the travel speed of a utility vehicle comprising
at least one drive motor (1),
at least one adjustable hydraulic pump (2) for pressurizing a pressure medium, said hydraulic pump (2) being driven by the t least one drive motor (1),
at least one hydraulic travel motor (5) for the propulsion of the utility vehicle,
at least one control slide valve (4) via which the pressure medium is suppliable to the at least one hydraulic travel motor (5),
at least one further hydraulic drive that is supplied with a pressurizing agent by the at least one hydraulic pump (2) and
at least one controller (7) by means of which an exclusive travel operation can be determined in which a drive power is only effected by the at least one hydraulic motor and not from any of the further hydraulic drives,
wherein the rotational speed of the at least one hydraulic travel motor (5) can be controlled/regulated at least via the rotational speed of the drive motor (1) in the exclusive travel operation,
wherein the rotational speed of the drive motor (1) can be set by means of the at least one controller (7), and
wherein the hydraulic pump (2) is fully pivoted out.

2. An apparatus (10) in accordance with claim 1, **characterized in that** the direction of rotation of the at least one hydraulic travel motor (5) can be controlled/regulated via the control slide valve (4).

3. An apparatus (10) in accordance with one of the preceding claims, **characterized in that** the at least one hydraulic travel motor (5) is adjustable and the rotational speed of the at least one hydraulic travel motor (5) can be controlled/regulated via the setting of the pivot angle of the hydraulic travel motor (5).

4. An apparatus (10) in accordance with one of the preceding claims, **characterized in that** the rotational speed of the at least one hydraulic travel motor (5) can be controlled/regulated via the setting of the pivot angle of the hydraulic pump (2).

5. An apparatus (10) in accordance with one of the preceding claims, **characterized in that** the drive motor (1) is a diesel engine.

6. A method for controlling/regulating the travel speed of a utility vehicle by means of an apparatus (10) in accordance with one of the claims 1 to 5, wherein the method comprises at least one step in which it is detected whether further consumers are operated in addition to the at least one hydraulic travel motor (5) and wherein, in the case in which no further consumers are operated, the travel speed control/regulation is switched in a further step from a control/regulation via a control/regulation element such as a control slide valve (4) to a travel speed control/regulation alternative to this.

7. A method in accordance with claim 6, **characterized in that** the alternative travel speed control/regulation comprises a control/regulation of the rotational speed of the at least one hydraulic travel motor (5) via a control/regulation of the rotational speed of the drive motor (1).

8. A method in accordance with claim 6 or claim 7, **characterized in that** the alternative travel speed control/regulation comprises a control/regulation of the rotational speed of the at least one hydraulic travel motor (5) via the setting of the pivot angle of the hydraulic travel motor (5).

9. A method in accordance with one of the claims 6 to 8, **characterized in that** the alternative travel speed control/regulation comprises a control/regulation of the rotational speed of the at least one hydraulic travel motor (5) via the setting of the pivot angle of the hydraulic pump (2).

## Revendications

1. Dispositif (10) de commande/régulation de la vitesse de conduite d'un véhicule de travail, comprenant
au moins un moteur d'entraînement (1),
au moins une pompe hydraulique (2) réglable destinée à mettre en pression un fluide de pression, laquelle est entraînée par l'au moins un moteur d'entraînement (1),
au moins un moteur de translation hydraulique (5) pour la propulsion du véhicule de travail,
au moins un tiroir de commande (4), par le biais duquel le fluide de pression peut être alimenté dans l'au moins un moteur de translation hydraulique (5),
au moins un autre entraînement hydraulique, qui est alimenté en fluide de pression par l'au moins une pompe hydraulique (2), ainsi que
au moins un contrôleur (7), au moyen duquel un mode de translation pur, dans lequel une puissance d'entraînement est fournie uniquement par l'au moins un moteur de translation hydraulique et par aucun des autres entraînements hydrauliques, peut être déterminé,
dans lequel, en mode de translation pur, la vitesse de rotation de l'au moins un moteur de translation hydraulique (5) peut être commandée/régulée au moins par le biais de la vitesse de rotation du moteur d'entraînement (1),
dans lequel la vitesse de rotation du moteur d'entraînement (1) peut être réglée au moyen de l'au moins un contrôleur (7), et
dans lequel la pompe hydraulique (2) est entièrement pivotée vers l'extérieur.

2. Dispositif (10) selon la revendication 1, **caractérisé en ce que** la direction de rotation de l'au moins un moteur de translation hydraulique (5) peut être commandée/régulée par le biais du tiroir de commande (4).

3. Dispositif (10) selon l'une des revendications précédentes, **caractérisé en ce que** l'au moins un moteur de translation hydraulique (5) peut être déplacé et la vitesse de rotation de l'au moins un moteur de translation hydraulique (5) peut être commandée/régulée par le biais du réglage de l'angle de pivotement du moteur de translation hydraulique (5).

4. Dispositif (10) selon l'une des revendications précédentes, **caractérisé en ce que** la vitesse de rotation de l'au moins un moteur de translation hydraulique (5) peut être commandée/régulée par le biais du réglage de l'angle de pivotement de la pompe hydraulique (2).

5. Dispositif (10) selon l'une des revendications précédentes, **caractérisé en ce que** le moteur d'entraînement (1) est un moteur Diesel.

6. Procédé de commande/régulation de la vitesse de conduite d'un véhicule de travail au moyen d'un dispositif (10) selon l'une des revendications 1 à 5, le procédé comprenant au moins une étape, dans laquelle il est détecté si d'autres consommateurs sont en fonctionnement en plus de l'au moins un moteur de translation hydraulique (5), et dans lequel, dans le cas où aucun autre consommateur n'est en fonctionnement, la commande/régulation de la vitesse de conduite est commutée dans une autre étape par une commande/régulation par le biais d'un élément de commande/régulation tel qu'un tiroir de commande (4) sur une autre commande/régulation de vitesse de conduite que celle-ci.

7. Procédé selon la revendication 6, **caractérisé en ce que** l'autre commande/régulation de la vitesse de conduite comprend une commande/régulation de la vitesse de rotation de l'au moins un moteur de translation hydraulique (5) par le biais d'une commande/régulation de la vitesse de rotation du moteur d'entraînement (1).

8. Procédé selon la revendication 6 ou 7, **caractérisé en ce que** l'autre commande/régulation de la vitesse de conduite comprend une commande/régulation de la vitesse de rotation de l'au moins un moteur de translation hydraulique (5) par le biais du réglage de l'angle de pivotement du moteur de translation hydraulique (5).

9. Procédé selon l'une des revendications 6 à 8, **caractérisé en ce que** l'autre commande/régulation de la vitesse de conduite comprend une commande/régulation de la vitesse de rotation de l'au moins un moteur de translation hydraulique (5) par le biais du réglage de l'angle de pivotement de la pompe hydraulique (2).
